# EUROPÄISCHE PATENTSCHRIFT

(11) **EP 2 693 097 B1**
(45) Veröffentlichungstag und Bekanntmachung des Hinweises auf die Patenterteilung: **15.12.2021**
(21) Anmeldenummer: 12005610.6
(22) Anmeldetag: 02.08.2012
(51) Int. Cl.: F16L 43/00

(54) **GAS ODER FLÜSSIGKEIT FÜHRENDES WECHSELVENTIL**
SHUTTLE VALVE CONDUCTING GAS OR LIQUID
SÉLECTEUR DE CIRCUIT CONDUCTEUR DE GAZ OU DE LIQUIDE

(43) Veröffentlichungstag der Anmeldung: 05.02.2014
(73) Patentinhaber: Phönix Armaturen-Werke Bregel GmbH, 34471 Volkmarsen (DE)
(72) Erfinder: Kellermann, Hannes Dr., 34117 Kassel (DE); Wodara, Gunter, 34454 Bad Arolsen (DE)
(74) Vertreter: Patentanwälte Walther Hinz Bayer PartGmbB

(56) Entgegenhaltungen:
- WO-A1-02/10628
- DE-C- 598 919
- GB-A- 1 263 237
- US-A- 2 056 782
- US-A- 2 303 949
- US-A- 4 744 695
- US-A- 5 054 819

## Beschreibung

Die Erfindung betrifft ein Gas oder Flüssigkeit führendes Wechselventil nach Anspruch 1.

Krümmer, insbesondere für Wechselventile sind aus dem Stand der Technik seit Langem bekannt. Wechselventile sind solche, die über einen Einlass- und zwei Auslassflansche verfügen, wobei durch einen Schieber der Durchlass entweder zu dem einen oder dem anderen Auslass geöffnet wird. Auf den Auslassflanschen ist jeweils ein Sicherheitsventil angeordnet.

Aufgebaut sind die Wechselventile aus einem Einlasskrümmer und zwei daran angeordneten Auslasskrümmern, auf deren Auslassflanschen sich jeweils ein Sicherheitsventil befindet. Mit dem Anschlusskrümmer sitzt das Wechselventil auf der Rohrleitung auf, die das Medium führt.

Sicherheitsventile sind derart ausgestaltet, dass sie bei Überdruck dafür sorgen, dass das Medium zwar abgeblasen werden kann, um den Druck zu reduzieren, dass aber das Medium in der Mehrzahl aller Fälle wieder in das System zurückgeführt wird, um zu verhindern das insbesondere bei giftigen Gasen solche Gase in die Umwelt gelangen.

Nach dem Stand der Technik ist es nun so, dass der Krümmer eines solchen Wechselventiles überdimensioniert ist, um Strömungsverluste gering zu halten. Der Grund hierfür ist darin zu finden, dass bei zu großen Strömungsverlusten möglicherweise das entsprechende mit dem Wechselventil verbundene Sicherheitsventil nicht mehr anspricht. Große Krümmergehäuse bedeuten allerdings einen erhöhten Materialeinsatz, wobei insbesondere dann, wenn die Krümmer aus Edelstahl hergestellt sind, ein solches Wechselventil bereits aufgrund des Krümmers sehr teuer ist.

Die WO 02/10628 A1 beschreibt in diesem Zusammenhang ein Wechselventil, bei dem eine Eingangsleitung in eine Ventilkammer mündet, an der wiederum ausgangsseitig zwei Ausgangsleitungen angeordnet sind.

Aus der US 2,056,782 A ist ein Krümmer bekannt, wobei der Krümmerquerschnitt im Krümmungsbereich auf der Außenseite des Krümmers abgeflacht ist.

Etwas ähnliches zeigt auch die US 5,054,819 A insofern, als dort auch auf der Außenseite des Krümmers der Querschnitt eine Abflachung aufweist.

Die US 2,303,949 A wiederum zeigt im Bereich der Umlenkung des Krümmers einen Querschnitt in Form eines Ovals. Auch die DE 598 919 C zeigt ein solches Oval im Bereich der Umlenkung des Krümmers.

Die US 4,744,695 A beschreibt eine Kabelführung in Form eines Rohres mit auf der Innenseite der Krümmung des Rohres angeordneter Abflachung.

Die GB 1263237 A lässt ebenfalls einen Krümmer erkennen, der auf der Innenseite der Krümmung des Krümmers eine Einlage aufweist, die zu einer Abflachung des Querschnitts des Krümmers auf der Innenseite führt. Durch die in dieser Schrift vorgeschlagene Konstruktion wird die Umlenkung im Verhältnis zur beabsichtigen Umlenkung vergrößert und damit eine Umlenkung der Strömung in Gegenrichtung notwendig.

Die der Erfindung zugrunde liegende Aufgabe besteht demzufolge darin die Strömungsverluste im Bereich des Krümmers zu minimieren, um durch eine kleinere Dimensionierung des Krümmers Material einzusparen.

Die erfindungsgemäße Lösung der Aufgabe zeichnet sich durch die Merkmale des Anspruchs 1 aus. Das Gas oder Flüssigkeit führende Wechselventil lässt also zwei Auslasskrümmer erkennen, die durch einen Einlasskrümmer miteinander in Verbindung stehen. Hierbei ist vorgesehen, dass der Einlasskrümmer einen Einlass und zwei Auslässe aufweist, wobei die Auslässe einander gegenüberliegend an dem Einlasskrümmer angeordnet sind. Der Auslasskrümmer und der Einlasskrümmer weisen jeweils eine Durchführung mit einem Einlass und jeweils einem Auslass auf, wobei die Durchführung vom Krümmereinlass zum Krümmerauslass über die Länge der Durchführung eine Umlenkung erfährt, wobei die Umlenkung des Krümmers vom Krümmereinlass zum Krümmerauslass über die Länge der Durchführung zwischen 60° und 90° beträgt. Im Bereich der Umlenkung der Durchführung des jeweiligen Krümmers geht der Querschnitt beider Krümmer in mehreren aufeinander folgenden Sektoren von einem nahezu runden oder ovalen Querschnitt über mehrere auf der Krümmerinnenseite der Durchführung abgeflachte Querschnitte wiederum in ein nahezu runden oder ovalen Querschnitt über. Im Bereich der abgeflachten Querschnitte der Durchführung weist die Querschnittskontur mehrere ineinander laufende kreisbogenförmige Abschnitte auf, wobei der Querschnitt in jedem Bereich der Durchführung des Krümmers im Wesentlichen gleich ist.

Bei einem Krümmer nach dem Stand der Technik ist es bislang so, dass der jeweilige Querschnitt über die Länge der Durchführung, also des Durchlasses des Krümmers immer unterschiedlich groß, insbesondere zur Mitte des Durchlasses oder der Durchführung kleiner ist, was zur Folge die bereits zuvor angesprochenen Strömungsverluste hat. Dadurch nun, dass die Querschnitte im Bereich der Durchführung des Krümmers im Bereich der Umlenkung auf der Krümmerinnenseite der Durchführung abgeflacht sind, entsteht für die einzelnen Querschnittsektoren ein Querschnitt nach Art eines "Brötchens", wobei jedoch die Querschnittskontur eine Fläche beschreibt, die in jedem der Sektoren über die Umlenkung der Durchführung im Wesentlichen gleich ist. Wenn nun im Wesentlichen keine Querschnittsverminderungen über die Länge der Durchführung auftreten, treten naturgemäß auch keine auch nur geringfügige Strömungsverluste auf.

Somit umfasst das Wechselventil drei Krümmer, nämlich einen Einlasskrümmer mit einem Einlassflansch zum Anbau an zum Beispiel eine Rohrleitung sowie zwei Auslassflansche zur Aufnahme jeweils eines Auslasskrümmers. Jeder Auslassflansch umfasst wiederum einen Einlass- und einen Auslassflansch, wobei der Auslasskrümmer des Einlasskrümmers zum Anschluss des Einlassflansches des Auslasskrümmers dient. An dem Anschlussflansch des jeweiligen Auslasskrümmers befindet sich ein Sicherheitsventil. Das Wechselventil weist eine Y-förmige Gestalt auf und besitzt einen Schieber, um den Durchlass zu dem einen oder dem anderen Sicherheitsventil zu ermöglichen.

Es wurde bereits darauf hingewiesen, dass der Querschnitt über die Länge der Durchführung im Wesentlichen gleich bleibt, eben durch die spezielle Ausgestaltung der Kontur des Querschnittes, wie dies zuvor beschrieben worden ist.

Hierbei ist nach einer ersten Ausführungsform eines Krümmers vorgesehen, dass die Umlenkung der Durchführung des Krümmers vom Einlass zum Auslass zwischen 60 Grad und 90 Grad beträgt. Hierbei ist zu berücksichtigen, dass die Umlenkung von einem einzigen Einlass zu einem einzigen Auslass nicht im Winkel von 90 Grad oder nahezu im Winkel von 90 Grad zwischen Ein- und Auslass verläuft, sondern der Winkel geringer ist, und vorzugsweise zwischen 60 Grad und 90 Grad, insbesondere jedoch bei 75 Grad liegt.

Bei einer zweiten Ausführungsform, bei der der Krümmer zwei einander gegenüberliegende Auslässe aufweist, beträgt der Umlenkwinkel vom Einlass zu jedem der beiden Auslässe circa 90 Grad.

Vorteilhafte Merkmale der Erfindung sind den Unteransprüchen zu entnehmen.

So ist insbesondere vorgesehen, dass der Radius des einen ersten kreisbogenförmigen Abschnitts, der der Abflachung gegenüberliegt, sich proportional zur Länge der Abflachung verhält. Das bedeutet, dass je kürzer die Abflachung ist, desto kleiner ist der Radius des einen ersten kreisbogenförmigen Abschnittes, der der Abflachung gegenüberliegt. Nach einem weiteren Merkmal der Erfindung ist vorgesehen, dass der Radius der beiden kreisbogenförmigen Abschnitte im Übergang von der Abflachung zu dem einen ersten kreisbogenförmigen Abschnitt sich umgekehrt proportional zur Länge der Abflachung verhält. Die Kontur des Querschnitts der Durchführung an den verschiedenen Sektoren kann somit nicht nur durch die Abflachung und dem der Abflachung gegenüberliegenden einen ersten kreisbogenförmigen Abschnitt beschrieben werden, sondern die Querschnittsform bzw. die Kontur des Querschnitts kann dadurch näher spezifiziert werden, das der Radius der beiden zweiten kreisbogenförmigen Abschnitte im Übergang von der Abflachung zu dem einen ersten kreisbogenförmigen Abschnitt sich umgekehrt proportional zur Länge der Abflachung verhält, was bedeutet, dass mit zunehmender Länge der Abflachung, der seitliche Radius im Übergang von der Abflachung zum einen ersten kreisbogenförmigen Abschnitt, der sich an die Abflachung anschließende Radius immer geringer wird.

Anhand der Zeichnungen wird die Erfindung nachstehend näher erläutert.
- Fig. 1: zeigt ein Wechselventil mit zwei Auslasskrümmern und einem Einlasskrümmer;
- Fig.2: zeigt den Auslasskrümmer, wobei ein Ein- und ein Auslass vorgesehen sind;
- Fig. 2a bis: zeigen den Querschnitt der Durchführung in unterschiedlichen
- Fig. 2c: Sektoren;
- Fig.3: zeigt den Einlasskrümmer mit einem Einlass und zwei Auslässen;
- Fig. 3a bis: zeigen den Querschnitt der Durchführung in unterschiedlichen
- Fig. 3d: Sektoren.

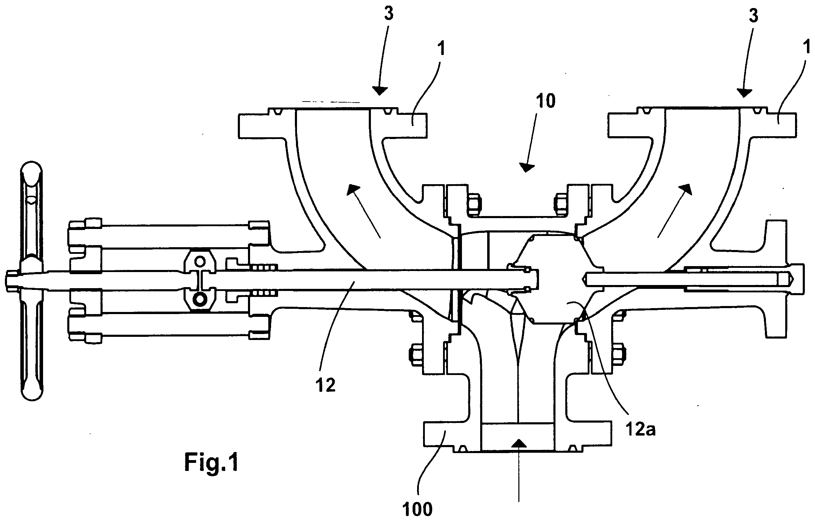

Fig. 1 zeigt das Wechselventil 10, wobei sich das Wechselventil 10 aus zwei Auslasskrümmern 1 zusammensetzt, die durch einen Einlasskrümmer 100 miteinander in Verbindung stehen. Die Form des Wechselventils ist in der Ansicht etwa Y-förmig. Das Wechselventil 10 besitzt darüber hinaus einen Schieber 12 mit einem Absperrglied 12a, wodurch wechselweise der eine Auslasskrümmer 1 mit dem Einlasskrümmer 100 mediumführend in Verbindung bringbar ist. Auf dem Auslass 3 eines jeden Auslasskrümmers 1 befindet sich jeweils ein Sicherheitsventil, das nicht dargestellt ist.

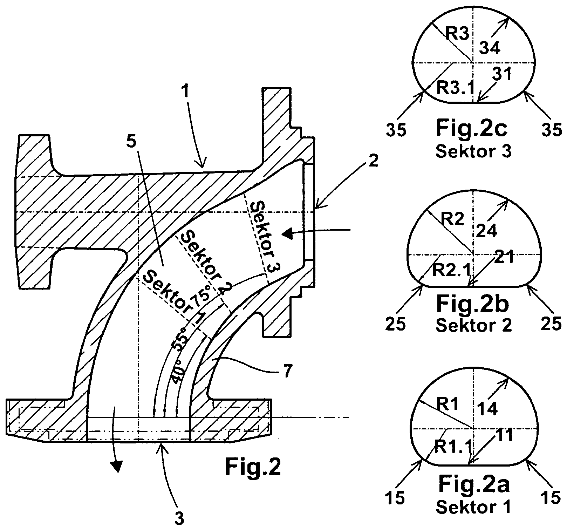

Aus den Darstellungen der Fig. 2 ist erkennbar der Auslasskrümmer mit 1 bezeichnet. Der Auslasskrümmer 1 besitzt den Einlass 2 und den Auslass 3 jeweils mit dem entsprechenden Flansch. Zwischen Einlass und Auslass weist der Krümmer die mit 5 bezeichnete Durchführung auf, die eine Innenwandung 7 zeigt. Im Bereich des Einlasses 2 zeigt die Durchführung einen im Wesentlichen runden oder ovalen Querschnitt; einen gleichen Querschnitt zeigt die Durchführung im Bereich des Auslasses 3. Zur Erläuterung der Erfindung ist die Durchführung 5 in drei Sektoren unterteilt, wobei der eine erste Sektor sich in einem Winkel von ca. 40 Grad zum Auslass befindet, der zweite Sektor in einem Winkel von 55 Grad und der dritte Sektor in einem Winkel von 75 Grad zum Auslass. Die Fig. 2a bis 2c zeigen in den entsprechenden Sektoren die jeweilige Querschnittskontur des Sektors. So ist aus Fig. 2a die Kontur der Durchführung 5 im Sektor 1 im Abstand von 40 Grad zum Auslass 2 erkennbar. Hierbei weist die Kontur im Bereich der Innenwandung 7 der Durchführung die Abflachung 11 auf, wobei der Abflachung 11 gegenüberliegend ein erster kreisbogenförmiger Abschnitt 14 mit einem Radius R1 vorgesehen ist. Der erste Abschnitt ist halbkreisförmig ausgebildet, und besitzt im Übergang zu dem flachen Abschnitt 11 zu beiden Seiten der Abflachung 11 jeweils einen weiteren, zweiten kreisbogenförmigen Abschnitt 15. Die zweiten kreisbogenförmigen Abschnitte 15 weisen jeweils einen Radius R1.1 auf, der wesentlich kleiner ist als der Radius R1 des ersten halbkreisförmigen Abschnittes 14. Betrachtet man nunmehr die Fig. 2b mit der Kontur der Durchführung im Sektor 2 im Abstand von 55 Grad vom Auslass 3, so erkennt man einen ersten kreisbogenförmigen Abschnitt 24, der über der Abflachung 21 liegt, wobei die Abflachung allerdings wesentlich länger ist als die Abflachung 11 im Sektor 1. Bezüglich des kreisbogenförmigen Abschnittes 24, der halbkreisförmig ausgebildet ist, gilt, dass auch dieser zu beiden Seiten durch zwei kreisbogenförmige zweite Abschnitte 25 in die Abflachung 21 übergeht, wobei der Radius R2 des ersten kreisbogenförmigen Abschnittes 24 größer ist als der Radius R1, der Radius R2.1 jedoch kleiner ist als der Radius R1.1 gemäß Fig. 2a. Der Grund hierfür ist allein darin zu finden, dass zur Beibehaltung der freien Querschnittsfläche bei Vergrößerung der Abflachung 21, die Abschnitte 25, die zu beiden Seiten der Abflachung gebildet werden, steiler verlaufen. Entsprechendes gilt für den Sektor 3, so wie er in Fig. 2c dargestellt ist. Der erste kreisbogenförmige Abschnitt 34 über der Abflachung 31 weist hierbei einen kleineren Radius R3 auf als in Fig. 2b, wobei der zweite kreisbogenförmige Abschnitt 35 zu beiden Seiten der Abflachung 31 im Übergang zu dem ersten kreisbogenförmigen Abschnitt 34, einen Radius R3.1 aufweist, der wiederum größer ist, als der in Fig. 2b aber auch größer als der in Fig. 2a, was der Tatsache geschuldet ist, dass in dem Bereich des Sektors 3, der sich im Abstand von etwa 75 Grad zum Auslass 2 befindet, die Querschnittskontur nunmehr durch die Verkleinerung der Abflachung 31 sich wieder mehr der Kreisbogenform bzw. einem Oval annähert.

Festzuhalten ist somit, dass die Kontur des Querschnitts in den einzelnen Sektoren 1 bis 3 bei gleicher Fläche eine zunehmende Abflachung aufweist, das heißt eine Abflachung aufweist, die länger wird, wobei gleichzeitig jedoch die Flanken der zweiten Abschnitte von der Abflachung zum ersten halbkreisförmigen oder kreisbogenförmigen Abschnitt steiler werden. Das heißt, die Form die Kontur über die einzelnen Sektoren 1 bis 3 ändert sich wie bei einem Gummiballon, der unter Beibehaltung seiner Querschnittsfläche auf eine Unterlage gedrückt wird.

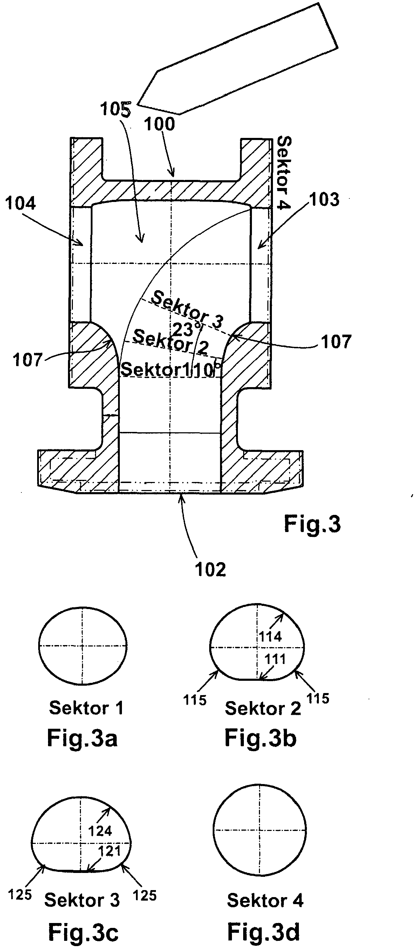

Aus der Darstellung gemäß Fig. 3 ist der Einlasskrümmer 100 dargestellt, der einen Einlass 102 aufweist sowie zwei Auslässe 103 und 104, wobei die Auslässe 103 und 104 einander gegenüberliegend an dem Krümmer angeordnet sind. Die jeweilige Durchführung vom Einlass 102 zu den beiden Auslässen 103 und 104 ist mit 105 bezeichnet. Die Innenwandungen von dem Einlass 102 zu dem jeweiligen Auslass 103 und 104 sind jeweils mit 107 gekennzeichnet. Auch bei der Darstellung gemäß Fig. 2 sind wiederum verschiedene Sektoren erkennbar, nämlich die Sektoren 1, 2, 3 und 4, wobei bereits der Sektor 1 einen Querschnitt aufweist, der einem Oval ähnelt. Der Einlass 102 hingegen zeigt einen runden Querschnitt. Das heißt, dass bereits beim Sektor 1 die Abflachung der Durchführung beginnt. Im Bereich des Sektors 2 erkennt man dann deutlich die Abflachung 111 auf der Innenseite 107 der Durchführung. Ebenfalls erkennbar ist der kreisbogenförmige erste Abschnitt 114 gegenüberliegend zu der Abflachung 111. Die zweiten kreisbogenförmigen Abschnitte 115 im Übergang von der Abflachung zum ersten kreisbogenförmigen Abschnitt 114 werden umso steiler, das heißt, der Radius nimmt ab, je größer die Länge der Abflachung 111 ist, wie sich dies insbesondere im Vergleich der Querschnittskontur aus Fig. 3b mit der gemäß Fig. 3c ergibt. Der Radius des zweiten kreisbogenförmigen Abschnittes 125 ist zu dem zweiten Abschnitt 115 signifikant steiler, das heißt, er weist einen signifikant kleineren Radius auf. Das heißt auch hier gilt, dass je länger die Abflachung ausgebildet ist, umso steiler ist der zweite Abschnitt im Übergang von der Abflachung zum ersten kreisbogenförmigen Abschnitt 124, wobei der Radius des Abschnittes 125 gegenüber dem des Abschnittes 115 vermindert ist, hingegen der Radius des ersten kreisbogenförmigen oder halbkreisförmigen Abschnittes 124 gegenüber dem des Abschnittes 114 aus Fig. 3b ebenfalls zugenommen hat. Insofern verhält sich die Veränderung der Querschnittsfläche der einzelnen Sektoren ähnlich wie bei der Durchführung gemäß Fig. 2, das heißt einem Krümmer mit nur einem Ein- und einem Auslass.

## Patentansprüche

1. Gas oder Flüssigkeit führendes Wechselventil mit zwei Auslasskrümmern (1), die durch einen Einlasskrümmer (100) miteinander in Verbindung stehen,
wobei der Auslasskrümmer (1) und der Einlasskrümmer (100) jeweils eine Durchführung (5; 105) mit einem Einlass (2; 102) und jeweils einem Auslass (3) aufweisen,
wobei die Durchführung (5; 105) vom Krümmereinlass zum Krümmerauslass über die Länge der Durchführung (5; 105) eine Umlenkung erfährt,
wobei die Umlenkung der Durchführung (5; 105) des Krümmers (1; 100) vom Krümmereinlass (2; 102) zum Krümmerauslass (3; 103) über die Länge der Durchführung (5; 105) zwischen 60° und 90° beträgt, wobei im Bereich der Umlenkung der Durchführung (5; 105) des jeweiligen Krümmers (1; 100) der Querschnitt beider Krümmer (1; 100) in mehreren aufeinanderfolgenden Sektoren von einem nahezu runden oder ovalen Querschnitt über mehrere auf der Krümmerinnenseite (7; 107) der Durchführung abgeflachte Querschnitte wiederum in einen nahezu runden oder ovalen Querschnitt übergeht,
wobei im Bereich der abgeflachten Querschnitte der Durchführung (5; 105) die Querschnittskontur mehrere ineinander laufende kreisbogenförmige Abschnitte (14, 15; 24, 25; 34, 35; 114, 115; 124, 125) aufweist,
wobei der Querschnitt in jedem Bereich der Durchführung des Krümmers (1; 100) im Wesentlichen gleich ist.

2. Gas oder Flüssigkeit führendes Wechselventil nach Anspruch 1,
**dadurch gekennzeichnet,**
**dass** der Radius des einen ersten kreisbogenförmigen Abschnitts (14, 24, 34; 114, 124) der Abflachung (11, 21, 31; 111, 121) gegenüberliegend sich proportional zur Länge der Abflachung (11, 21, 31; 111, 121) derart verhält, dass je kürzer die Abflachung ausgebildet ist, desto kleiner der Radius des einen ersten kreisbogenförmigen Abschnitts ist.

3. Gas oder Flüssigkeit führendes Wechselventil nach einem der voranstehenden Ansprüche,
**dadurch gekennzeichnet,**
**dass** der Radius der beiden kreisbogenförmigen Abschnitte (15, 25, 35; 115, 125) im Übergang von der Abflachung (11, 21, 31; 111, 121) zu dem einen ersten kreisbogenförmigen Abschnitt (14, 24, 34; 114, 124) sich umgekehrt proportional zur Länge der Abflachung derart verhält, dass mit zunehmender Länge der Abflachung der Radius kleiner wird.

4. Gas oder Flüssigkeit führendes Wechselventil nach einem der voranstehenden Ansprüche,
**dadurch gekennzeichnet,**
**dass** die Umlenkung der Durchführung (5) des Krümmers (1) vom Einlass (2) zum Auslass (3) circa 75 Grad beträgt.

5. Gas oder Flüssigkeit führendes Wechselventil nach einem der voranstehenden Ansprüche,
**dadurch gekennzeichnet,**
**dass** der Krümmer (100) als Einlasskrümmer zwei einander gegenüberliegende Auslässe (103, 104) aufweist, wobei der Umlenkwinkel vom Einlass (102) zu jedem Auslass (103, 104) circa 90 Grad beträgt.

## Claims

1. A shuttle valve conducting gas or liquid and having two outlet manifolds (1) that are connected to one another by an inlet manifold (100),
wherein the outlet manifold (1) and the inlet manifold (100) each have a conduit (5; 105) having an inlet (2; 102) and a respective outlet (3),
wherein the conduit (5; 105) undergoes a deflection from the manifold inlet to the manifold outlet over the length of the conduit (5; 105),
wherein the deflection of the conduit (5; 105) of the manifold (1; 100) from the manifold inlet (2; 102) to the manifold outlet (3; 103) amounts to between 60° and 90° over the length of the conduit (5;105), with the cross-section of both manifolds (1; 100) in turn changing in the region of the deflection of the conduit (5; 105) of the respective manifold (1; 100) in a plurality of successive sectors from an almost round or oval cross-section over a plurality of cross-sections flattened on the inner manifold side (7; 107) of the conduit into an almost round or oval cross-section, with the cross-section contour in the region of the flattened cross-sections of the conduit (5; 105) having a plurality of arcuate sections (14, 15; 24, 25; 34, 35; 114, 115; 124, 125) running into one another, and
wherein the cross-section is substantially the same in each region of the conduit of the manifold (1; 100).

2. A shuttle valve conducting gas or liquid in accordance with claim 1,
**characterized in that**
the radius of the one first arcuate section (14, 24, 34; 114, 124) disposed opposite the flattened portion (11, 21, 31; 111, 121) behaves proportionally to the length of the flattened portion (11, 21, 31; 111, 121) such that the shorter the flattened portion is, the smaller the radius of the one first arcuate section is.

3. A shuttle valve conducting gas or liquid in accordance with one of the preceding claims,
**characterized in that**
the radius of the two arcuate sections (15, 25, 35; 115, 125) behaves inversely proportionally to the length of the flattened portion in the transition from the flattened portion (11, 21, 31; 111, 121) to the one first arcuate section (14, 24, 34; 114, 124) such that the radius becomes smaller as the length of the flattened portion increases.

4. A shuttle valve conducting gas or liquid in accordance with one of the preceding claims,
**characterized in that**
the deflection of the conduit (5) of the manifold (1) from the inlet (2) to the outlet (3) amounts to approximately 75 degrees.

5. A shuttle valve conducting gas or liquid in accordance with one of the preceding claims,
**characterized in that**
the manifold (100) as an inlet manifold has two mutually opposite outlets (103, 104), with the deflection angle from the inlet (102) to each outlet (103, 104) amounting to approximately 90 degrees.

## Revendications

1. Sélecteur de circuit conducteur de gaz ou de liquide comprenant deux coudes de sortie (1), qui sont reliés l'un à l'autre par un coude d'entrée (100),
dans lequel le coude de sortie (1) et le coude d'entrée (100) comportent respectivement un passage (5 ; 105) avec une entrée (2 ; 102) et respectivement une sortie (3),
dans lequel le passage (5 ; 105) fait l'objet d'un changement de direction de l'entrée de coude à la sortie de coude sur la longueur du passage (5 ; 105),
dans lequel le changement de direction du passage (5 ; 105) du coude (1 ; 100), de l'entrée de coude (2 ; 102) à la sortie de coude (3 ; 103) sur la longueur du passage (5 ; 105), est compris entre 60° et 90°,
dans lequel, dans la zone du changement de direction du passage (5 ; 105) du coude (1 ; 100) respectif, la section transversale des deux coudes (1 ; 100) dans plusieurs secteurs successifs, passe d'une section transversale presque ronde ou ovale, à plusieurs sections transversales aplaties sur le côté intérieur de coude (7 ; 107) du passage, puis de nouveau à une section transversale presque ronde ou ovale, dans lequel, dans la zone des sections transversales aplaties du passage (5 ; 105), le contour de section transversale présente plusieurs parties (14, 15 ; 24, 25 ; 34, 35 ; 114, 115 ; 124, 125) en forme d'arc de cercle se rejoignant les unes les autres,
dans lequel la section transversale est sensiblement identique dans chaque zone du passage du coude (1 ; 100).

2. Sélecteur de circuit conducteur de gaz ou de liquide selon la revendication 1,
**caractérisé en ce que**
le rayon de la première partie (14, 24, 34 ; 114, 124) en forme d'arc de cercle opposée à l'aplatissement (11, 21, 31 ; 111, 121) est proportionnel à la longueur de l'aplatissement (11, 21, 31 ; 111, 121) de telle manière que plus l'aplatissement est conçu court, plus le rayon de la première partie en forme d'arc de cercle est petit.

3. Sélecteur de circuit conducteur de gaz ou de liquide selon l'une des revendications précédentes,
**caractérisé en ce que**
le rayon des deux parties (15, 25, 35 ; 115, 125) en forme d'arc de cercle situées dans le passage de l'aplatissement (11, 21, 31 ; 111, 121) à la première partie (14, 24, 34 ; 114, 124) en forme d'arc de cercle, est inversement proportionnel à la longueur de l'aplatissement de telle manière que plus la longueur de l'aplatissement augmente, plus le rayon diminue.

4. Sélecteur de circuit conducteur de gaz ou de liquide selon l'une des revendications précédentes,
**caractérisé en ce que**
le changement de direction du passage (5) du coude (1), de l'entrée (2) à la sortie (3), est d'environ 75 degrés.

5. Sélecteur de circuit conducteur de gaz ou de liquide selon l'une des revendications précédentes,
**caractérisé en ce que**
le coude (100) en tant que coude d'entrée présente deux sorties (103, 104) opposées l'une à l'autre, l'angle de changement de direction de l'entrée (102) à chaque sortie (103, 104) étant d'environ 90 degrés.
